# EUROPEAN PATENT SPECIFICATION

(11) **EP 0 699 421 B1**
(45) Date of publication and mention of the grant of the patent: **12.01.2000**
(21) Application number: 95850141.3
(22) Date of filing: 17.08.1995
(51) Int. Cl.: A61C 17/08

(54) **Disposable dental saliva ejector**
Wegwerfbare Absaugvorrichtung für Speichel
Dispositif d'aspiration jetable pour salive

(30) Priority: 02.09.1994 SE 9402926; 17.03.1995 SE 9501025; 31.07.1995 WO PCT/SE95/00900
(43) Date of publication of application: 06.03.1996
(73) Proprietor: KÖPINGS INDUSTRI-PLAST AB, 731 50 Köping (SE); Dry Invention Bengt Mattsson AB, 753 15 Uppsala (SE)
(72) Inventor: Albertsson, Christer, S-633 47 Eskilstuna (SE); Mattsson, Bengt, S-753 15 Uppsala (SE); Folkö, Matts, S-731 15 Köping (SE)
(74) Representative: Klauber, Tomas

(56) References cited:
- GB-A- 2 059 780
- US-A- 3 787 978
- US-A- 4 017 975
- US-A- 4 906 188
- US-A- 5 203 699

## Description

The invention refers to a disposable dental saliva ejector comprising a stem having a tubular suction part to be introduced into the patient's oral cavity, a straight holder part and a curved intermediate part connecting the two afore said parts, the suction part being provided with at least one suction orifice and the holder part having a free end at which an evacuation tubing may be connected to the ejector. A tongue holder is attached to the suction part, a chin plate is displaceably mounted on the holder part and a duct means extends from the suction part to the lower free end of the holder part and is there adapted for connection with an evacuation tubing.

Saliva ejectors of this kind are used at dental operations and serve the double purpose of keeping the operational field in the oral cavity dry, and of pressing down and holding back the patient's tongue.

A great number of various dental saliva ejectors have become known and among them, at a time before the introduction of disposable medical appliances, metal saliva ejectors in which the tongue holder is fixable by means of a screw in a mounting sleeve of the ejector (Swedish patents 143 632 and 163 702).

Another saliva ejector, described in U.S. patent 3,753,292 and which is not provided with a tongue holder and a chin plate, has a support frame of metal or plastics with a connection base at one end and an open, i.e. trough-shaped, guide channel extending therefrom to a restraint loop at the other end. The guide channel comprises a curving part between the base and the loop and is somewhat more than semi-circular in cross-section, so that it can embrace and retain a flexible conduit with circular cross-section.

It is also known (e.g. by U.S. Patent 5,094,616) to cover the suction end of a dental saliva ejector with a disposable element of soft plastics to protect the patient's oral cavity.

It is an object of the invention to provide a disposable saliva ejector made entirely of plastics, i.e. not comprising any metal components, so as to facilate the disposal thereof, and which is provided with as well with a tongue holder, onto which a soft plastics element with filtering capacity may be slipped-on, as with an adjustable chin plate which may be positively fixed in a selected height position on the holder part, swung into at least one lateral position, and preferably temporarily locked in the lateral position.

Another object of the present invention is to provide a disposable saliva ejector which instead of being made of PVC may be produced of more environment-friendly materials such as e.g. polypropene, polyethylene or a decomposable starch-based polymer.

The disposable saliva ejector of the present invention is characterized by the features stated in the enclosed claim 1, further advantageous embodiments being defined in the annexed subclaims

Exemplary embodiments of the invnetion are shown in the accompanying drawings, in which
FIG. 1 is an elevational view of a preferred embodiment of the saliva ejector of the invention;
FIG. 2 is a lateral view of the stem of the ejector of FIG. 1;
FIG. 3 is a cross-sectional view on a somewhat larger scale along the plane III-III in FIG. 1;

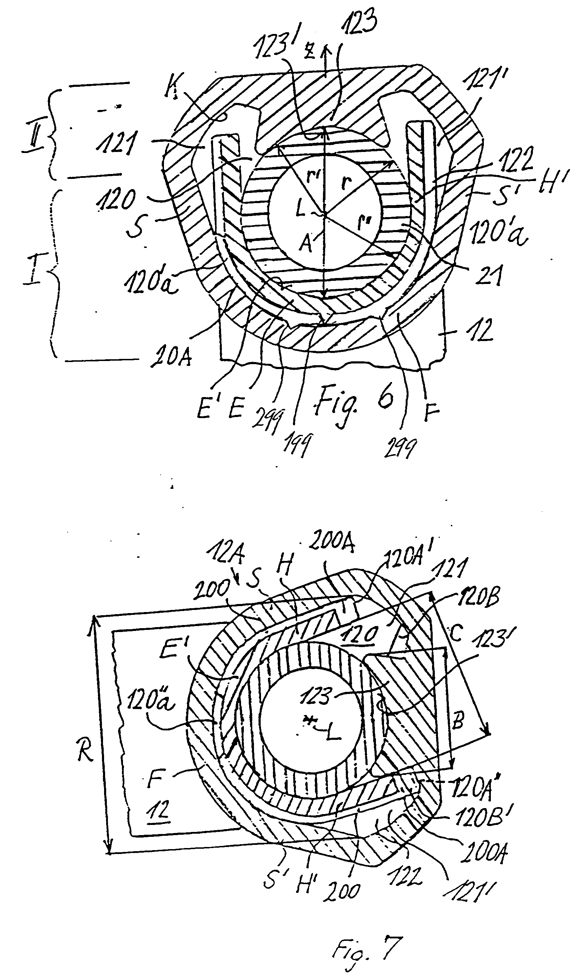

FIG. 4 is a plan view of a slightly modified embodiment of the chin plate of FIG. 1 on the scale of Fig. 1;
FIG. 5 is a perspective view of an alternative embodiment of the frame structure of the tongue holder;
FIG. 6 is a cross-sectional view on a considerably larger scale along the plane VI-VI in FIG. 1 through a first embodiment of the mounting sleeve of the chin plate and through the holder part of the stem, the chin plate being in its central position;
FIG. 7 is a similar cross-sectional view through a second embodiment of the mounting sleeve, the chin plate being in one of its lateral positions;
FIG. 8 is a plan view of a fourth embodiment of the mounting sleeve;
FIG. 9 is cross-sectional view through a fifth embodiment of the mounting sleeve of the chin plate and through the holder part of the stem, the chin plate being in its central position;
FIG. 10 is a lateral view in the sense of arrow X in FIG. 9 of the mounting sleeve of FIG. 9, and
FIG. 11 is a lateral in the sense of arrow XI in FIG. 10 of the mounting sleeve of FIGS. 9 and 10.

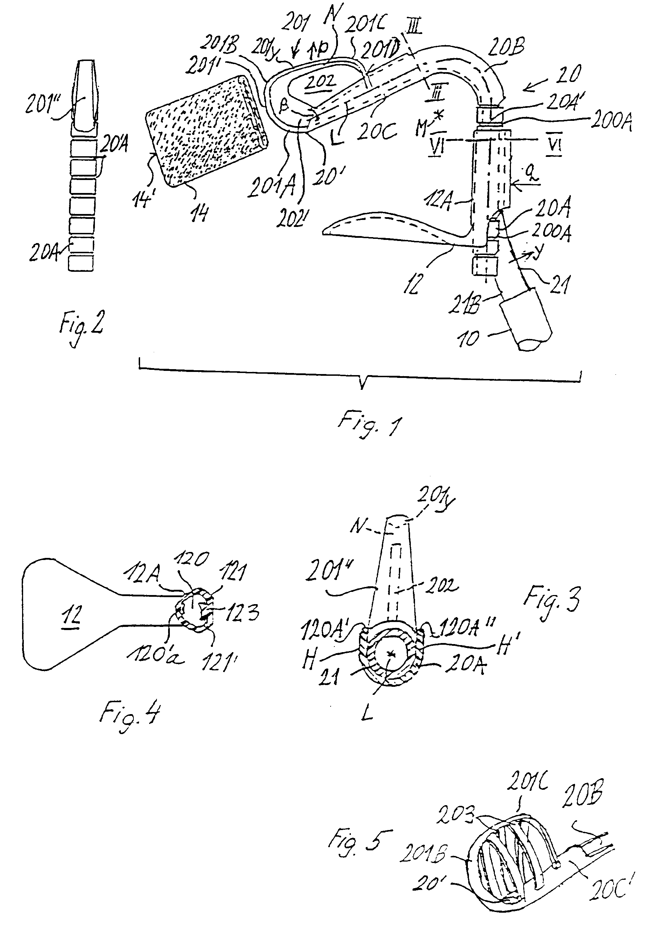

According to FIGS. 1 to 3, the saliva ejector of the invention comprises a rigid stem 20 which has a longitudinal axis L and which essentially includes a straight holder part 20A, a curved intermediate part 20B, and a distinctively shaped suction part 20C. All said parts lie in one plane and the entire stem 20 is made in one piece of such plastic material as e.g. polypropene, or polyethylene, or of a decomposable starch-based polymer.

The holder part 20A and the intermediate part 20B have the shape of a trough limited by parallel longitudinal edges 120A', 120A'' (FIG. 3). The trough is U-shaped in cross-section with two parallel shanks H, H', and is preferably open in the direction outwards the bend of the intermediate part 20B, i.e. away from that part's center of curvature M. It may however in principle also be open in the reverse direction.

The suction part 20C defines an extension of the intermediate part 20B, but is tubular instead of trough-shaped, and tapers toward its free end where it it is provided with a suction orifice 20' and where it passes into a frame structure 201 which further comprises three massive, i.e. non-hollow, limbs 201', 201y, 201'' and which encompasses an inner frame space. The frame structure 201, onto which a filter element 14 may be slipped-on, extends in the plane of the stem 20, projects away from the stem's longitudinal axis L in the opposite direction than where the said center of curvature M lies, and has the general shape of a rounded-of rectangle whose first limb is essentially embodied by the suction part 20C itself. The limbs of the frame structure 201 are interconnected by three rounded corners 201A, 201B, 201C and one sharp corner 201D. Viewed in a plane at right angles to the drawing plane of FIG.1, the outer limb 201' and the inner limb 201'' taper in the direction away from the first limb (suction part 20C), as is best seen in FIGS. 2 and 3.

The suction orifice 20' opens toward the inner frame space, i.e. away from the bottom of the patient's mouth. The area of the suction opening 20' may be selected within certain limits by selecting the angle β relative the longitudinal axis L under which the tubular suction part 20C is terminated.

The inner frame space may be occupied, with the exception of at least an area 202' adjacent the suction orifice 20', by a plate 202 which is affixed to at least one of the frame limbs, preferably to the suction part 20C, as shown in the drawing. The plate 202 is preferably detached from the frame structure 201 adjacently at least one of the other limbs, such as at N adjacently the upper limb 201y, in order to endow the frame structure 201 with some degree of resilience.

The upper limb 201y may be cambered outwards, as indicated by the arrow p, and may slope in the direction towards the inner limb 201''. As the frame structure 201 is, like the rest of the stem 20, made of plastics, the partial detachment of the plate 202 and the cambering of the limb 201y have the purpose and effect (possibly in combination with the filter element's own resilience) that the filter element 14 is securely temporarily retained on the frame structure 201 when slipped on, and at the same time is readily removable after use.

Said filter element 14 has in the illustrated exemplary embodiment the general shape of a flat bag which is open only along the one side which defines its inner edge by which it is slipped-on on the frame structure, and otherwise is fully sealed, i.e. even along its outer edge 14'. Preferably, at least the two of its outer corners at the said outer edge 14' are rounded-of or chamfered. When placed on the frame structure 120, the filter bag is consequently closed on the three sides which lie adjacent the lower, the outer and the upper limb of the frame structure 201.

In FIG. 5 is shown a frame structure 201' provided with outwardly cambered ribs 203 defining a cage which holds the walls of the filter bag 14 apart.

According to the present invention, the suction part 20C and the frame structure 201, 201' projecting therefrom are merged into a distinctively shaped unit which embodies, in particular when complemented by the plate 202 and/or the filter bag 14, a tongue holder which extends essentially in the plane of the stem 20 (i.e. the drawing plane of FIG. 1).

In the stem 20 is a flexible, and at least to some degree resilient, hose or tube 21 inserted which defines a duct means extending from the suction part 20C to the lower free end of the holder part 20A.

The upper end 21A of the tube 21 is in any known and suitable manner, e.g. by bonding, affixed in the tubular suction part 20C, and the rest of the tube 21 reposes in the trough of the intermediate and holder parts. The lower end 21B of the tube 21 projects from the holder part 20A and may be in any known manner connected to an evacuation hose or tube 10 leading to a suction device, not shown.

A chin plate 12, defining a fixation means of the saliva ejector, is with the aid of a mounting sleeve 12A slidably, and to a limited extent turnably mounted, i.e. slipped-on, on the holder part 20A. Upon application, the saliva ejector rests with the lowermost portion of its suction part 20C, which generally is covered by the soft filter bag 14, on the bottom of the patient's mouth, and the chin plate 12 is brought into an operational position by being moved upwards from a lowermost position on the holder part 20A and, when the best fixing position has been reached, is locked in place by being swung into a lateral position.

This adjustment movement of the chin plate must be easy to perform and the chin plate must be reliably fixed in the selected height position, being at the same time readily releasable.

In order to define a selected height position of the chin plate 12, the holder part 20A of the ejector stem 20 is on its outer face at selected intervals provided with transversal grooves 20A' (FIG. 1) and/or with indents 200A, and the mounting sleeve 12A of the chin plate 12 is provided with co-operating engagement means, exemplary embodiments of which are described more in detail below.

In order to allow the chin plate to be turned or swung from a central position into at least one lateral or side position, the inner opening 120 in the mounting sleeve 12 has a particular shape adapted to co-operate with the holder part 20A of the stem 20. Preferably, the possibility is provided to swing the chin plate into one of two possible lateral positions. Also preferably, means (snap-in means) for releasably locking the chin plate in the lateral position are provided.

According to FIG. 6, the inner opening (seleeve opening) 120 of the mounting sleeve 12A has a distinctive shape comprisin a first section I with an essentially circular portion F and two diverging, straight shanks S, S', and a second section II which comprises two lateral lobes 121, 121' separated by a central back-up portion 123. The inner opening 120 has thus the shape of a letter U with diverging shanks S, S' which pass into the two lateral lobes 121, 121'.

The back-up portion 123 is limited by a concave contact face 123' and has a breadth B (FIG.7) which is smaller than the mutual spacing C of the shanks H, H' of the holder part 20A, i.e. of the longitudinal edges 120A', 120A'' of the holder part 20A.

The tube 21 has in cross-section a radius r, and as well the contact face 123', as the inner face E' of the curved part E in the holder part 20A, have essentially the same radius of curvature r', r''.

The shape of the outer limitation of the lobes 121, 121', in continuation of the U-shaped portion, such as at K, is functionally irrelevant, and may be selected only with regard to a suitable outer shape of the mounting sleeve 12A.

The co-operating engagement means at the mounting sleeve 12A may in a first embodiment, shown in FIG. 6, be defined by a concave crest 120'a which for clarity is not shown in section and which is located at the inside of the curved portion F of the opening 120, being adapted to engage the grooves 20A' on the outer face of the holder part 20A. The crest 120'a occupies a sector of approximately 150° as seen from the longitudinal axis L.

The distance A between the contact face 123' of the back-up portion 123 and the inner face E' of the curved portion E of the holder part 20A is somewhat smaller than the outer diameter (=2r) of the flexible tube 21. The tube 21 in the mounting sleeve 12 is thus slightly compressed in the direction A, and as it tends to resume its undeformed shape, urges the back-up portion 123 outwardly in the sense of arrow z. Consequently, the curved portion F of the mounting sleeve 12 is pushed towards the curved portion E of the holder part 20A, and the crest 120'a is pushed into an adjacent groove 20A'

This effect is still enhanced by the fact that the evacuation tubing 10 tends to bend the inserted tube 21 outwardly in the sense of arrow y (FIG. 1) when the ejector is in use.

The chin plate 12 may be by hand moved up and down the holder part 20A, the crest 120'a snapping from one groove 20A' to another, and the mounting sleeve 12A being possibly pressed in the sense of arrow q (FIG.1). In the embodiment of FIG. 6, the chin plate 12 is thus retained in its selected height position by engagement of the crest 120'a in one of the grooves 20A'.

The central position of the chin plate 12 is the position in which the chin plate extends symmetrically on both sides of the plane of the stem 20 (i.e. the drawing plane of FIG. 1). For changing this central position into a lateral one, the chin plate is pushed aside so long as stop means allow, i.e. untill one of the shanks S, S' of the opening 120 bears against the adjacent shank H, H' of the holder part 20A, and/or one of the edges 120A', 120A'' comes to bear against, or at least to lie closely adjacent, the innermost end of one of the lobes 121, 121', as shown in FIG. 7.

Said stop means may preferably be complemented by locking means which temporarily lock the chin plate in the selected lateral position. Such locking means can be embodied by any suitable snap-in means or other means known for the purpose. In the example shown in FIG. 6 comprise this means an axially extending crest such as 199 on one of the holder part or mounting sleeve (the holder part in the illustrated embodiment) and corresponding grooves such as 299 in the other part (the mounting sleeve in the illustrated embodiment). The inherent resilience of the tube 21 will press the longitudinal crest into the longitudinal groove lying opposite.

It will be appreciated that the general condition for the sideward motion of the chin plate 12 is that the spacement R (FIG.7) between the ends of the shanks S, S' of the inner opening 120 in the mounting sleeve 12A is larger than the spacement C between the ends of the shanks H, H' of the holder part 20A (i.e. between its longitudinal edges 120A', 120A''), and that at the same time the breadth B of the back-up portion 123 is smaller than said spacing C.

This condition does not necesserily demand that the shanks H, H' extend parallel. It includes several other alternatives, e.g. those in which the shanks S, S' are parallel and the shanks H, H' are convergent, or the shanks S, S' are convergent and the shanks H, H' still more convergent (the tube 21 being flexible and resilient, it may be squeezed even into a channel with tapering side walls).

It will be readily recognised that the degree to which the shanks S, S' in the mounting sleeve diverge more (or converge less) than the shanks H, H' of the holder part, defines the lateral positions of the chin plate, e.g. to ±15° relative the central position.

In the second embodiment according to FIG. 7 is the crest 120'a of FIG.6 complemented by webs 120B, 120B' provided in both lobes 121, 121' at their innermost ends, and by indents 200A (FIG. 1), adapted to receive these webs, in the edges 120A', 120A''.

The indents 200A have the same mutual spacing as the grooves 20A' and are preferably, but not necessarily, located at both ends of these grooves, as shown in FIG. 7.

The chin plate 12 may in its central position be moved up and down the holder part 20A in the same manner as described before, and is locked in a selected indent 200A (groove 20A) by being turned into one of its lateral positions, so that the respective web 120B, 120B' becomes engaged in one of the indents 200A. For disengaging, the chin plate 12 is again turned into the central position. The above mentioned snap-in means releasably secure the chin plate in the lateral position.

If stronger fixation is desired, the webs 120B, 120B' may be provided in several tiers. The centrally located crest 120'' a may in this instance be shorter than in the embodiment of FIG. 6, or it may be entirely omitted. It will be understood that even the webs 120B, 120B' may be entirely substituted by the crest 120'.

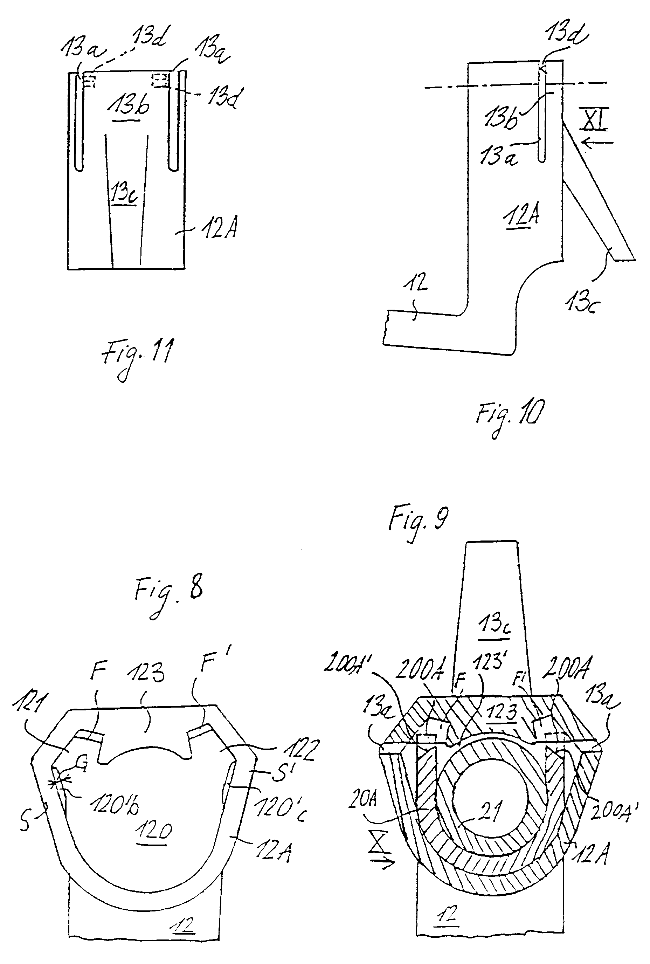

In a third embodiment according to FIG. 8 is the single centrally located crest 120'a, 120''a substituted by two lateral crests 120'b, 120'c, each located at one end of the U-shaped portion of the inner opening 120. These crests 120'b, 120'c have such dimensions, chiefly a width G as to engage the grooves 20A' when the chin plate 12 is in one of its lateral positions, but not when it is in its central position.

In a fourth embodiment according to FIGS. 9 to 11 is a part 13b of the mounting sleeve 12A separated from the rest of the mounting sleeve by two slots 13a which are situated at the transition between the U-shaped portion of the opening 120 and the two lobes 121, 121'. Said part 13b embodies a resilient flap, carries laterally on the inside of its free end two engagement teeth 13d, and has a handle arm 13c which projects obliquely from the outside.

The webs 120B, 120B' extend in this embodiment essentially so far as to the contact face 123' of the back-up part 123, and the indents 200A are deeper than in the embodiment of e.g. FIG. 8. The inner limitations 200A' (FIG. 9) of the indents are chamfered outwards, so that the teeth 13d cannot prevent the chin plate 12 from being turned into its lateral positions.

The teeth 13d snap-in in the indents 200A when the chin plate is in its central position. When the outer end of the handle arm 13c is depressed, the free end of the flap 13b is lifted and the teeth 13d are disengaged.

In contrast to the previously described embodiments, the chin plate 12 may be as well locked, as disengaged even in its central position.

The saliva ejector of the invention may be as a whole, i.e. the stem with the inserted tube and with the chin plate, discarded as normal "all plastics" refuse. Only the filter bag, which possibly may contain amalgam chips or the like, has to be removed from the tongue holder and discarded as "perilous" refuse.

## Claims

1. A disposable dental saliva ejector comprising
- a stem (20) including a tubular suction part (20C) to be introduced into the patient's oral cavity and which is provided with at least one suction orifice (20'), a straight holder part (20A) which has a free lower end, and a curved intermediate part (20B) interconnecting the suction and holder parts, all said three parts lying in one common plane;
- a tongue holder attached to the suction part;
- a chin plate (12) displaceably mounted on the holder part (20A), and
- a duct means extending from the suction part (20C) to the free lower end of the holder part (20A) and adapted to be there connected with an evacuation tubing (10),
**characterized by**
- the holder part (20A) embodying a trough-shaped guiding channel which has an outer face and an inner face (E') and is U-shaped in cross-section with a curved central portion and two straight shanks (H, H');
- said guiding channel being adapted to receive said duct means and being limited by two longitudinal edges (120A', 120A'') extending at a given mutual spacement (C);
- the chin plate (12) having a mounting sleeve (12A) with a non-circular inner sleeve opening (120) by means of which it is slipped-on on the holder part (20A);
- said sleeve opening (120) having a first section (I) with a curved portion having the same radius of curvature as the outer face of the curved portion (E) of the holder part and passing into two straight shanks (S, S') which at their free ends are more spaced apart (R) than what are the longitudinal edges (120A', 120A'') of the holder part (20A),
- and, in continuation of the said first section (I), a second section (II) having one lobe (121, 121') adjacent each of the two shanks (S, S') of the first section (I), and a back-up portion (123) located between the two lobes,
- said back-up portion (123) having a breadth (B) which is smaller than the said spacement (C) of the longitudinal edges (120A', 120A'') of the holding part (20A), and being limited by a concave limiting face (123');
- the two lobes (121, 121') being adapted to receive the said longitudinal edges (120A', 120A'') and thereto adjacent portions of the holder part (20A) so as to enable the chin plate (12) to occupy, besides of a central position, at least one, and preferably two opposite, swung-out lateral positions;
- the holder part (20A) and the mounting sleeve (12A) being provided with co-operating, releasable locking means for temporarily locking the chin plate (12) in a selected height position on the holder part (20A), and co-operating stop means defining the said at least one lateral position of the chin plate (12).

2. The saliva ejector of claim 1, **characterized** by co-operating means on the holder part (20A) and on the mounting sleeve (12A) for releasably locking the chin plate (12) in a selected lateral position.

3. A saliva ejector in accordance with claim 1 or 2, **characterized** by the duct means being embodied by a resilient and flexible tube (12) the outer periphery of which has the same radius (r) of curvature as the inner periphery of the curved portion (E) of the holder part (20A) and the concave limiting face (123') of the back-up portion (123), the distance between the said limiting face (123') and the said inner face of the holder part (20A) being less than twice the said radius (r), so that said tube (12) is constantly compressed in the direction between the limiting face (123') and the said inner face.

4. A saliva ejector in accordance with one or more of the preceding claims, **characterized** by said height position locking means comprising a plurality of transverse grooves (20A') provided at selected intervals on the outer face of the holder part (20A) and, at the inside of the sleeve opening (120), co-operating projecting crest means defined either by a single projecting crest (120'a) with a concave limitation edge at the curved portion of the sleeve opening (120), or by one lateral crest (120'b, 120'c) with a rectilinear limitation edge at each end of the U-shaped portion of the sleeve opening (120), said two crests (120'b, 120'c) being dimensioned so as to engage the transverse grooves (20A') on the holder part (20A) only when the chin plate (12) is in a lateral position.

5. A saliva ejector in accordance with one or more of the preceding claims, **characterized** by said height position locking means at the mounting sleeve (12A) comprising at least one web (120B) at the inner end of each lobe (121, 121') and a plurality of indents (200A) at selected intervals on said longitudinal edges (120A', 120A'') adapted to receive said web (120B) when the chin plate (12) is turned into a lateral position.

6. A saliva ejector in accordance with one or more of the claims 1 to 4, **characterized** by said height position locking means comprising a plurality of indents (200A) at selected intervals on said longitudinal edges (120A', 120A'') of the holder part (20A), and a resilient flap on the mounting sleeve (12B), which flap carries a handle arm (13c) on the outside, is on its inner side provided with laterally located teeth (13d) engageable in said indents (200A), and preferably is embodied by a part of the mounting sleeve (12A) separated from the rest of the mounting sleeve by two slots (13a) located between the first and the second sections (I, II) of the sleeve opening (120).

7. A saliva ejector in accordance with one or more of the preceding claims, **characterized** by the tongue holder being embodied by a frame structure (201) which encompasses an inner frame space into which opens the at least one suction orifice (20'), which frame structure comprises a plurality of limbs (201' 201'', 201y), projects from the suction part (20C) in the direction away from the chin plate (12) extends in the said common plane, and is adapted to carry a disposable filter element.

8. The saliva ejector of claim 7, **characterized** by the tubular suction part (20C), extending in continuation of the intermediate part (20B), tapering away from the intermediate part (20B) toward said at least one suction orifice (20') and embodying a first limb of the frame structure (201), the other limbs (201', 201'', 201y) of which are non-hollow.

9. The saliva ejector of claim 8, **characterized** by the filter element being embodied by a flat filter bag (14) which is closed on all sides with the exception of the side on which it is slipped-on on the frame structure (201).

10. A saliva ejector in accordance with one or more of the claims 7 to 9, **characterized** by a plate (202), attached to at least one of the said limbs (201', 201'', 201y), preferably to the said first limb (20C), being mounted in the inner frame space so that at least a limited area (202') adjacent the at least one suction orifice (20') is left free, said plate (202) being preferably detached from at least the one limb (202y) which is opposite the said first limb (20C) so as to endow the frame structure (201) with a certain degree of resilience at right angles to the longitudinal direction of the first limb/suction part (20C).

## Patentansprüche

1. Eine einmal benutzbare Einrichtung zum Absaugen von Speichel für zahnärztliche Zwecke, mit
- einem stangenförmigen Element (20), das ein rohrförmiges Saugstück (20C), welches zum Einführen in die Mundöffnung des Patienten ausgebildet und mit mindestens einer Saugöffnung (20') versehen ist, ein gerades Haltestück (20A) mit einem freien unteren Ende und ein bogenförmiges Zwischenstück (20B), das das Saugstück mit dem Haltestück verbindet, aufweist, wobei alle drei Stücke in einer gemeinsamen Ebene angeordnet sind;
- einem Zungenhalter, der mit dem Saugstück in Verbindung steht;
- einer Kinnplatte (12), die verschiebbar auf dem Haltestück (20A) angeordnet ist, und
- Führungen, die sich von dem Saugstück (20C) zu dem freien unteren Ende des Haltestückes (20A) erstrecken und dort zur Verbindung mit einer Saugleitung (10) ausgebildet sind,
**dadurch gekennzeichnet**, daß
- das Haltestück (20A) einen durchgehend geformten Führungskanal bildet, der eine äußere Fläche und eine innere Fläche (E') aufweist und einen U-förmigen Querschnitt mit einem gebogenen Mittelteil und zwei geraden Schenkeln (H, H') besitzt;
- der Führungskanal zur Aufnahme der Führungen ausgebildet und durch zwei sich längs erstreckende Kanten (120A', 120A'') begrenzt ist, die mit einem gegebenen gegenseitigen Abstand (C) angeordnet sind;
- die Kinnplatte (12) eine Ansatzbuchse (12A) mit einer unrunden inneren Buchsenöffnung (120) aufweist, mit der sie auf das Haltestück (20A) aufgesetzt ist;
- die Buchsenöffnung (120) einen ersten Querschnitt (I) mit einem gebogenen Teil aufweist, der mit dem gleichen Krümmungsradius wie die äußere Fläche des gebogenen Teils (E) des Haltestücks ausgestattet ist und in zwei gerade Schenkel (S, S') übergeht, die an ihren freien Enden einen größeren Abstand (R) zueinander als die sich längs erstreckenden Kanten (120A', 120A'') des Haltestücks (20A) aufweisen,
- und, in Fortsetzung dieses ersten Querschnittes (I) einen zweiten Querschnitt (II) mit einer Ausbuchtung (121, 121') an jedem der beiden Schenkel (S, S') des ersten Querschnittes (I) und einem rückwärtigen Teil (123) zwischen den beiden Ausbuchtungen aufweist,
- der rückwärtige Teil (123) eine Breite (B) aufweist, die schmaler als der Abstand (C) der sich längs erstreckenden Kanten (120A', 120A'') des Haltestücks (20A) und durch eine konkave Abschlußfläche (123') begrenzt ist;
- die beiden Ausbuchtungen (121, 121') zur Aufnahme der sich längs erstreckenden Kanten (120A', 120A'') und der daran anschließenden Bereiche des Haltestücks (20A) ausgebildet sind, damit die Kinnplatte (12) neben einer Mittelstellung mindestens eine, vorzugsweise jedoch zwei, verschwenkte Seitenstellungen einnehmen kann;
- das Haltestück (20A) und die Ansatzbuchse (12A) zusammenwirkende lösbare Verriegelungen zum temporären Verriegeln der Kinnplatte (12) in einer ausgewählten Höheneinstellung auf dem Haltestück (20A) und entsprechende Anschläge zur Festlegung der mindestens einen verschwenkten Seitenstellung der Kinnplatte (12) aufweisen.

2. Die Einrichtung zum Absaugen von Speichel nach Anspruch 1, **dadurch gekennzeichnet**, daß auf dem Haltestück (20A) und auf der Ansatzbuchse (12A) zusammenwirkende Elemente zum lösbaren Verriegeln der Kinnplatte (12) in einer ausgewählten Seitenstellung vorgesehen sind.

3. Eine Einrichtung zum Absaugen von Speichel nach Anspruch 1 oder 2, **dadurch gekennzeichnet**, daß die Führungen von einem federnd nachgiebigen und flexiblen Rohr (12) gebildet sind, dessen äußerer Umfang den gleichen Krümmungsradius (r) besitzt wie der innere Umfang des gebogenen Teils (E) des Haltestücks (20A) und die konkave Abschlußfläche (123') des rückwärtigen Teils (123), wobei der Abstand zwischen der konkaven Abschlußfläche (123') und der inneren Fläche des Haltestücks (20A) kleiner als das Doppelte dieses Radiusses (r) ist, sodaß das Rohr (12) stetig in dieser Richtung zwischen der konkaven Abschlußfläche (123') und der inneren Fläche zusammengepresst wird.

4. Eine Einrichtung zum Absaugen von Speichel nach einem oder mehreren der vorangehenden Ansprüche, **dadurch gekennzeichnet**, daß die Höheneinstellung eine Mehrzahl querverlaufender Nuten (20A'), die auf der äußeren Fläche des Haltestücks (20A) in ausgewählten Abständen angeordnet sind, und auf der Innenseite der Buchsenöffnung (120) entsprechende Vorsprünge, die entweder von einer einzelnen Rippe (120'a) mit einen konkaven Begrenzungsrand an dem gebogenen Teil der Buchsenöffnung (120) oder von einem seitlichen Fortsatz (120'b, 120'c) mit einem geradlinig verlaufenden Begrenzungsrand an jedem Ende des U-förmigen Querschnitts der Buchsenöffnung (120) gebildet werden, aufweist, wobei die zwei Fortsätze (120'b, 120'c) so dimensioniert und angeordnet sind, daß sie in die querverlaufenden Nuten (20A') des Haltestücks (20A) nur dann eingreifen, wenn sich die Kinnplatte (12) in einer Seitenstellung befindet.

5. Eine Einrichtung zum Absaugen von Speichel nach einem oder mehreren der vorangehenden Ansprüche, **dadurch gekennzeichnet**, daß die Höheneinstellung auf der Ansatzbuchse (12A) mindestens eine Rippe (120B) am inneren Ende jeder Ausbuchtung (121, 121') und mehrere Kerben (200A) in ausgewählten Abständen auf den sich längs erstreckenden Kanten (120A', 120A'') zur Aufnahme der Rippe (120B) aufweist, wenn die Kinnplatte (12) in eine Seitenstellung verschwenkt ist.

6. Eine Einrichtung zum Absaugen von Speichel nach einem oder mehreren der Ansprüche 1 bis 4, **dadurch gekennzeichnet**, daß die Höheneinstellung mehrere Kerben (200A) in ausgewählten Abständen auf den sich längs erstreckenden Kanten (120A', 120A'') des Haltestücks (20A) und eine nachgiebige Lippe auf der Ansatzbuchse (12B) aufweist, wobei die Lippe auf der Außenseite einen der Handhabung dienenden Arm (13c) trägt, auf ihrer Innenseite mit seitlich angeordneten, mit den Kerben (200A) zusammenwirkenden Zähnen (13d) versehen ist und vorzugsweise von einem Teil der Ansatzbuchse (12A) gebildet wird, die von dem übrigen Bereich der Ansatzbuchse durch zwei Schlitze (13a) getrennt ist, die zwischen dem ersten und zweiten Querschnitt (I, II) der Buchsenöffnung (120) angeordnet sind.

7. Eine Einrichtung zum Absaugen von Speichel nach einem oder mehreren der vorangehenden Ansprüche, **dadurch gekennzeichnet**, daß der Zungenhalter von einer rahmenartigen Struktur (201) gebildet wird, die einen inneren Hohlraum umgibt, in den sich die mindestens eine Saugöffnung (20') erstreckt, wobei die rahmenartige Struktur mehrere Stege (201', 201'') aufweist, von dem Saugstück (20C) in eine der Kinnplatte (12) abgekehrte Richtung absteht, in der gemeinsamen Ebene angeordnet ist und zur Aufnahme eines Wegwerf-Filterelements ausgebildet ist.

8. Die Einrichtung zum Absaugen von Speichel nach Anspruch 7, **dadurch gekennzeichnet**, daß das rohrförmige Saugstück (20C), welches sich im Anschluß an das Zwischenstück (20B) erstreckt, von dem Zwischenstück (20B) zu der mindestens einen Saugöffnung (20') konisch ausgebildet ist und einen ersten Steg der rahmenartigen Struktur (201) darstellt, während die anderen Stege (201', 201'', 201y) der rahmenartigen Struktur nicht hohl ausgebildet sind.

9. Die Einrichtung zum Absaugen von Speichel nach Anspruch 8, **dadurch gekennzeichnet**, daß das Filterelement ein flacher Filterbeutel (14) ist, der mit Ausnahme der Seite, mit der er über die rahmenartige Struktur (201) gezogen wird, an allen Seiten geschlossen ausgebildet ist.

10. Eine Einrichtung zum Absaugen von Speichel nach einem oder mehreren der Ansprüche 7 bis 9, **dadurch gekennzeichnet**, daß eine Platte (202) vorgesehen ist, die an mindestens einem der Stege (201', 201'', 201y) befestigt ist, vorzugsweise an dem ersten Steg (20C), und in dem inneren Hohlraum so angeordnet ist, daß mindestens ein begrenzter Bereich (202') benachbart zu der mindestens einen Saugöffnung (20') frei gelassen ist, wobei die Platte (202) vorzugsweise von dem mindestens einen Steg (202y) lösbar ist, der gegenüber dem ersten Steg (20C) angeordnet ist, damit die rahmenartige Struktur (201) eine gewisse Nachgiebigkeit rechtwinklig zur Längserstreckung des ersten Steges bzw. der Saugöffnung (20C) aufweist.

## Revendications

1. Ejecteur jetable de salive dentaire comprenant :
- une tige (20) incluant une partie tubulaire d'aspiration (20C) destinée à être introduite dans la cavité orale du patient et qui est munie d'au moins un orifice d'aspiration (20'), une partie rectiligne de maintien (20A) qui comprend une extrémité inférieure libre, et une partie intermédiaire courbée (20B) reliant entre elles les parties d'aspiration et de maintien, l'ensemble desdites trois parties étant disposé dans un plan commun ;
- un mainteneur de langue fixé à la partie d'aspiration ;
- un plateau pour menton (12) monté déplaçable sur la partie de maintien (20A), et;
- un moyen d'amenée ("duct means") s'étendant de la partie d'aspiration (20C) à l'extrémité inférieure libre de la partie de maintien (20A) et adapté pour y être relié à un tubage ("tubing") d'évacuation (10),
caractérisé par :
- la partie de maintien (20A) réalisant un canal de guidage en forme de cuvette ("trough-shaped") qui comprend une face extérieure et une face intérieure (E') et présente, en coupe, une forme en U avec une portion centrale courbée et deux jambes rectilignes (H, H') ;
- ledit canal de guidage étant adapté pour recevoir ledit moyen d'amenée et étant limité par deux bords longitudinaux (120A', 120A'') s'étendant à un intervalle commun donné (C) ;
- le plateau pour menton (12) présentant un manchon d'installation ("mounting sleeve") (12A) ayant une ouverture intérieure de manchon (120) non circulaire au moyen de laquelle il est enfilé sur la partie de maintien (20A) ;
- ladite ouverture de manchon (120) présentant une première section (I) avec une portion courbée présentant le même rayon de courbure que la face extérieure de la portion courbée (E) de la partie de maintien et passant à l'intérieur de deux jambes rectilignes (S, S') qui sont à leurs extrémités libres plus espacées l'une de l'autre (R) que ne le sont les bords longitudinaux (120A', 120A'') de la partie de maintien (20A),
- et, dans la continuité de ladite première section (I), une seconde section (II) présentant un lobe (121, 121') adjacent à chacune des deux jambes (S, S') de la première section (I), et une portion d'appui (123) située entre les deux lobes,
- ladite portion d'appui (123) présentant une largeur (B) qui est inférieure audit intervalle (C) des bords longitudinaux (120A', 120A'') de la partie de maintien (20A), et étant limitée par une face limitante concave (123') ;
- les deux lobes (121, 121') étant adaptés pour recevoir lesdits bords longitudinaux (120A', 120A'') et les portions de la partie de maintien (20A) qui lui sont adjacentes de manière à permettre au plateau pour menton (12) d'occuper, en plus d'une position centrale, au moins une, et de préférence deux, positions latérales pivotantes ("swung-out") et opposées;
- la partie de maintien (20A) et le manchon d'installation (12A) étant munis de moyens de verrouillage libérables coopérant pour verrouiller temporairement le plateau pour menton (12) dans une position haute sélectionnée sur la partie de maintien (20A), et des moyens d'arrêt coopérants qui définissent ladite au moins une position latérale du plateau pour menton (12).

2. Ejecteur de salive selon la revendication 1, caractérisé par des moyens coopérants sur la partie de maintien (20A) et sur le manchon d'installation (12A) pour verrouiller de façon libérable le plateau pour menton (12) dans une position latérale sélectionnée.

3. Ejecteur de salive conforme à la revendication 1 ou 2, caractérisé par le moyen d'amenée qui est réalisé par un tube élastique et flexible (12) dont la périphérie extérieure présente le même rayon de courbure (r) que la périphérie intérieure de la portion courbée (E) de la partie de maintien (20A) et la face limitante concave (123') de la portion d'appui (123), la distance entre ladite face limitante (123') et ladite face intérieure de la partie de maintien (20A) étant inférieure à deux fois ledit rayon (r), de telle manière que ledit tube (12) soit constamment comprimé dans la direction s'étendant entre la face limitante (123') et ladite face intérieure.

4. Ejecteur de salive conforme à une ou plus des revendications précédentes, caractérisé par lesdits moyens de verrouillage en position haute qui comprennent une pluralité de rainures transverses (20A') prévues à des intervalles sélectionnées sur la face extérieure de la partie de maintien (20A) et, sur l'intérieur de l'ouverture de manchon (120), des moyens de type crêtes ("crest means") saillants définis soit par une simple crête en saillie (120'a) avec un bord de limitation concave sur la portion courbée de l'ouverture du manchon (120), ou par une crête latérale (120'b, 120'c), ayant un bord de limitation rectiligne à chaque extrémité de la portion en forme de U de l'ouverture de manchon (120), lesdites deux crêtes (120'b, 120'c) étant dimensionnées de manière à être en prise avec les rainures transverses (20A') sur la partie de maintien (20A) seulement lorsque le plateau pour menton (12) est dans une position latérale.

5. Ejecteur de salive conforme à l'une ou plus des revendications précédentes, caractérisé par lesdits moyens de verrouillage en position haute sur le manchon d'installation (12A) qui comprennent au moins une nervure ("web") (120B) sur l'extrémité intérieure de chaque lobe (121, 121') et une pluralité d'encoches ("indents") (200A) à des intervalles sélectionnés sur lesdits bords longitudinaux (120A', 120A'') adaptés pour recevoir ladite nervure (120B) lorsque le plateau pour menton (12) est tourné dans une position latérale.

6. Ejecteur de salive conforme à l'une ou plus des revendications 1 à 4, caractérisé par lesdits moyens de verrouillage en position haute qui comprennent une pluralité d'encoches (200A) à des intervalles sélectionnés sur lesdits bords longitudinaux (120A', 120A'') de la partie de maintien (20A), et un volet ("flap") élastique sur le manchon d'installation (12B), lequel volet porte un bras de manipulation ("handle arm") (13c) sur l'extérieur, est sur son côté intérieur muni de dents (13d) disposées latéralement et capables de s'engager dans lesdites encoches (200A), et est de préférence réalisé par une partie du manchon d'installation (12A) séparée du reste du manchon d'installation par deux fentes ("slots") (13a) disposées entre la première et la seconde section (I, II) de l'ouverture de manchon (120).

7. Ejecteur de salive conforme à l'une ou plus des revendications précédentes, caractérisé par le mainteneur de langue qui est réalisé par une structure de type cadre ("frame structure") (201) qui enferme un espace de cadre ("frame space") intérieur à l'intérieur duquel s'ouvre le au moins un orifice d'aspiration (20'), laquelle structure de type cadre comprend une pluralité de branches ("limbs") (201', 201'', 201y), s'étend à partir de la partie d'aspiration (20C) dans la direction s'éloignant du plateau pour menton (12), s'étend dans ledit plan commun, et est adaptée pour porter un élément de type filtre ("filter element") jetable.

8. Ejecteur de salive selon la revendication 7, caractérisé par la partie tubulaire d'aspiration (20C), s'étendant dans la continuité de la partie intermédiaire (20B), qui va en diminuant ("tapering away") de la partie intermédiaire (20B), vers ledit au moins un orifice d'aspiration (20') et qui réalise une première branche de la structure de type cadre (201), les autres branches (201', 201'', 201y) de laquelle sont non creuses.

9. Ejecteur de salive selon la revendication 8, caractérisé par l'élément filtre qui est réalisé par un sachet filtre ("filter bag") plat (14) qui est fermé sur tous ses côtés à l'exception du côté sur lequel il est enfilé sur la structure de type cadre (201).

10. Ejecteur de salive conforme à l'une ou plus des revendications 7 à 9, caractérisé par une plaque (202), fixée à au moins l'une desdites branches (201', 201'', 201y), de préférence à ladite première branche (20C), qui est montée dans l'espace intérieur du cadre de telle manière qu'au moins une zone limitée (202') adjacente au au moins un orifice d'aspiration (20') est laissée libre, ladite plaque (202) étant de préférence détachée au moins de la branche (202y) qui est opposée à ladite première branche (20C) de manière à doter la structure de type cadre (201) d'un certain degré d'élasticité aux angles droits dans la direction longitudinale de la première branche/partie d'aspiration (20C).
